# EUROPEAN PATENT SPECIFICATION

(11) **EP 1 391 135 B1**
(45) Date of publication and mention of the grant of the patent: **15.12.2010**
(21) Application number: 02726321.9
(22) Date of filing: 23.05.2002
(51) Int. Cl.: H04Q 11/04, H04L 12/56, H04L 29/06

(54) **METHOD AND APPARATUS FOR COMMUNICATIONS BANDWIDTH ALLOCATION**
VERFAHREN UND VORRICHTUNG ZUR KOMMUNIKATIONSBANDBREITENZUTEILUNG
PROCEDE ET APPAREIL D'ATTRIBUTION DE LARGEUR DE BANDE DE COMMUNICATIONS

(30) Priority: 26.05.2001 GB 0112881
(43) Date of publication of application: 25.02.2004
(73) Proprietor: Cambridge Broadband Networks Limited, Cambridge CB4 0WZ (GB)
(72) Inventor: PORTER, John, David, Cambridge CB4 0DS (GB)
(74) Representative: Ponder, William Anthony John
(86) International application number: PCT/GB2002/002392
(87) International publication number: WO 2002/098056

(56) References cited:
- WO-A-00/56023
- US-A- 6 081 536

## Description

This invention relates to a method and apparatus for communications bandwidth allocation and, in particular, to the allocation of bandwidth between users in a telecommunications system such as a fixed wireless access (FWA) system.

In many telecommunications systems, such as FWA, mobile telephone or cable systems, available bandwidth is shared between a number of users. In such systems users typically purchase bandwidth and a system operator will aim to sell as much bandwidth as possible. Often, the amount of bandwidth sold may exceed the total bandwidth available because not all users will require access at the same time. For example, an operator of a cable network offering internet access may expect that at any particular time, on average, a certain proportion of users will not be seeking access to bandwidth and that, even when a user is connected to the internet, their bandwidth requirement will be intermittent. Therefore, the operator can increase their revenue by selling to users an aggregate bandwidth greater than the total available bandwidth and expect that, most of the time, no problem of bandwidth allocation to users will arise.

As the amount of bandwidth sold increases, the likelihood arises that, at times, the aggregate bandwidth sought by users will exceed the total bandwidth available. At these times of overload, a problem arises of allocating the available bandwidth to the users. Under these circumstances, all users clearly cannot have the bandwidth which they would normally expect and, depending on the business model used by the system operator, the bandwidth which they may have paid for. The problem is then to arrange that system performance during overload degrades in a manner acceptable to the users.

WO00/56023A discloses a system for allocating bandwidth to users, using priority classes and queuing the users according to a lower or higher priority.

### Summary of Invention

The invention provides a method, a communications system and a communications system controller as defined in the appended independent claims. Preferred or advantageous features of the invention are set out in dependent sub-claims.

In a preferred aspect, the invention thus advantageously provides a method for enabling graceful degradation of the service to users as user demand overloads the available bandwidth.

Under these circumstances, as the number of users contending for bandwidth increases, it is important that all contending users retain access to some bandwidth, even if the amount of bandwidth is reduced, and that the available bandwidth is efficiently and effectively allocated to the users. Adhering to these requirements ensures graceful degradation of the service under overload conditions, and may advantageously be achieved by the various features of the invention. Specifically, the provision of active and inactive pools of users ensures that only those users actively seeking bandwidth at any time, who are placed in the active pool, are taken into account in the process of bandwidth allocation. This advantageously increases the efficiency of bandwidth allocation by clearly identifying the users involved. The users in the inactive pool can enter the bandwidth allocation procedure at any time by making a request for bandwidth, when they will be moved to the active pool. This advantageously minimises the number of users to be considered by a bandwidth allocation controller at any time.

The number of users to be considered at any time may advantageously be further reduced by removing users from the inactive pool under predetermined conditions, for example, when a user has been inactive for longer than a predetermined time, such as 5 minutes or 15 minutes. A user who has used bandwidth recently is more likely to contend for further bandwidth than a user who has not used bandwidth for a long time, so the inactive pool can act as a buffer containing those users who are not actively seeking or using bandwidth but are most likely to do so.

Users in the active pool queue for bandwidth allocations, and cycle through the queue if they need further allocations. This ensures that all active users see the same proportional downgrading of their service, the extent of downgrading depending on the number of users in the queue.

Advantageously, it may be appropriate to allow different users to send or receive different amounts of data as they reach the head of the queue. This might reflect different types of user or different amounts paid by users. For example, a user allocated a greater amount of data each time they cycle to the head of the queue may experience less service degradation under overload conditions than a user allocated a smaller amount of data.

The allocation of bandwidth to users is subject to different constraints for different types of communication. For example, a voice call requires continuous access to the necessary voice channel, otherwise the voice call cannot be made. By contrast, many data services are less critically affected by reduction in channel bandwidth. It may therefore be advantageous to apply the use of active and inactive pools only to such data services, or in different ways to different types of service.

A particularly preferred aspect of the invention aims to achieve this by dividing users into different classes, which are given different priorities under overload conditions. In this context, the term user should be understood to distinguish between different services required by a single subscriber to the communications system as well as between different subscribers. For example when a subscriber contends for both a voice channel and a data channel, these may be considered as two distinct users and placed in different priority classes, or even treated as two distinct users in a single active or inactive pool, as appropriate.

In this aspect of the invention, users in a higher priority class may be handled so as to be less affected during overload conditions than users in a lower priority class. Thus, for example, to meet certain overload conditions, users in a higher priority class might see a 10% reduction in bandwidth while users in a lower priority class might see a 50% reduction in bandwidth. This may be achieved in various ways, as follows.

In one aspect, a system operator might offer certain users a guaranteed amount of bandwidth, for example for bandwidth critical services such as voice, or at increased cost. Such users would be placed in a highest priority class and queue in the active pool in that class to be allocated predetermined amounts of bandwidth. It should be noted that a guaranteed bandwidth generally does not require continuous access to bandwidth but access to the guaranteed amount of bandwidth on average, usually with suitably limited granularity. In the highest priority class, therefore, the system controller ensures that every user contending for bandwidth at any time achieves their guaranteed bandwidth. If more users in the highest class contend, the length of the queue in the active pool in that class increases but the guaranteed bandwidth is still provided. Under overload conditions, this may adversely affect service to users in lower classes. In this aspect of the invention, the bandwidth available to users in lower priority classes is the total bandwidth less the bandwidth required for the guaranteed bandwidth class.

In a further aspect, different classes may be handled so that under overload conditions users in higher priority classes retain more of their non-overload bandwidth than those in lower priority classes. Under non-overload conditions, each user has access to a predetermined amount of bandwidth which corresponds to the amount of data each user can send or receive when it reaches the head of the queue in the active pool in its class. During overload conditions, if further users contend for bandwidth conditions may worsen. As this happens, bandwidth is reduced further for lower priority class users than for higher priority class users. This may be achieved either by decreasing the frequency at which the user at the head of the queue in a lower priority class is granted bandwidth compared to the user at the head of the queue in a higher priority class, or by reducing the amount of data each user at the head of the queue can send by a proportionately greater factor in a lower priority class than in a higher priority class.

As will be appreciated, various ways of handling users in different priority classes can be combined. For example, a highest priority class offering guaranteed bandwidth may be combined with one lower priority class in which bandwidth for each user is reduced during overload, or with two or more ranked lower priority classes subjected to progressively greater reductions in bandwidth during overload.

### Specific Embodiments and Best Mode of the Invention

Embodiments of the invention will now be described by way of example, with reference to the drawings, in which;
Figure 1 is a diagram of the priority class and pool structure of an embodiment of the invention;
Figure 2 is a block diagram of a communications system controller embodying the invention; and
Figure 3 is a flow diagram illustrating the operation of the controller of figure 2.

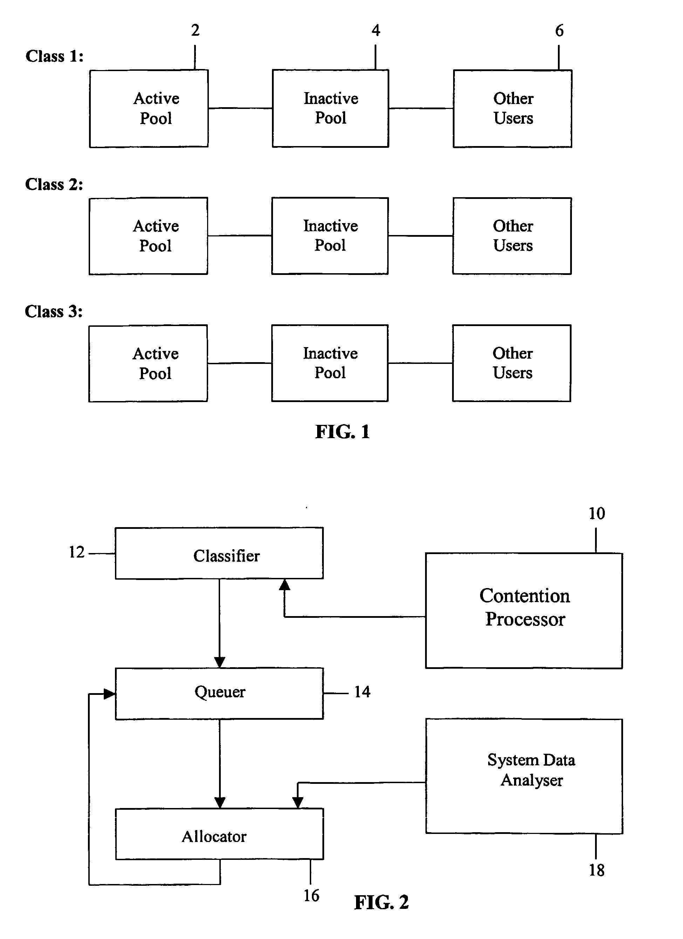

Figure 1 outlines the class structure of a specific embodiment of the invention in which users of a fixed wireless access (FWA) service are classified into three classes, namely classes 1, 2 and 3. Within each class, depending on their current activity, users may be positioned in an active pool 2, an inactive pool 4 or in an other-users category 6. As will be described below, users are placed in the other-users category when they have not sought or accessed system bandwidth for longer than a timeout period.

In the embodiment, users in class 1 have a guaranteed bandwidth allocation.

Figure 2 is a block diagram of a system controller for allocating bandwidth to users within the priority class structure of Figure 1.

When a system subscriber wishes to transmit data, he seeks an allocation of bandwidth by making a contention request to a contention processor 10. A subscriber may make requests of different types, for example to request a voice channel or a data channel. In the embodiment, these requests are handled differently and therefore, in the terminology of the present application, are considered as distinct users of the system.

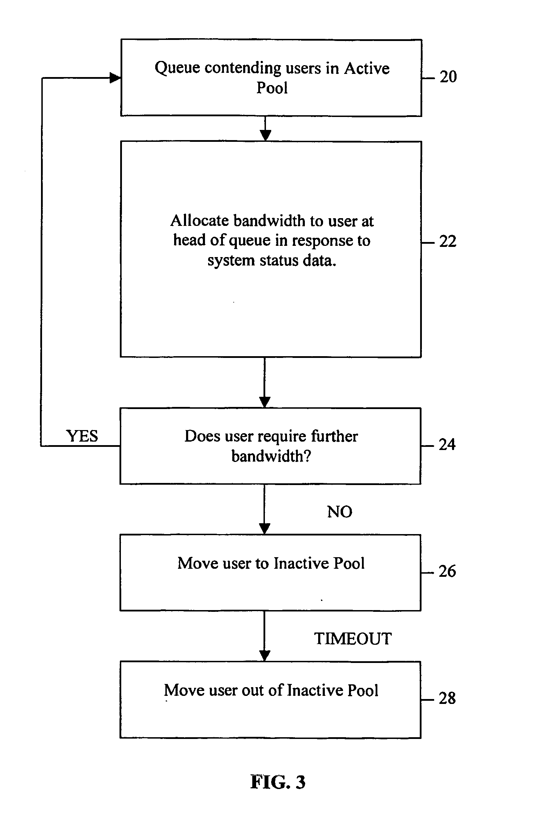

If the contention request is successful, a classifier 12 identifies the class in which the user belongs and a queuer 14 places the user at the end of a queue in the active pool 2 in the appropriate class. This queuing step is step 20 in Figure 3, which is a flow chart illustrating the subsequent operation of the apparatus of Figure 2.

A quantity of data is allocated by an allocator 16 to each user in the queue (step 22) for transmission when that user reaches the head of the queue. This quantity depends on a number of parameters, which are provided by a system data analyser 18. These parameters include the number of users in the queue, the number of users queued in other classes, the level of service which the subscriber has purchased from the system operator, and the current degree of overloading of the communications systems. Thus, if the user is in class 1 a predetermined amount of bandwidth is guaranteed and therefore the amount of data allocated to the user will depend only on the level of service purchased from the system operator. By contrast, if the user is in class 2 or 3, the amount of data allocated will depend on the other factors such as the number of queued users and the current overloading status of the communications system as well as the level of service purchased from the system operator. For example, if the system is not overloaded and there are only a small number of users queued, then the user may be allocated an amount of data corresponding to the purchased level of service. Advantageously, the user may even be allocated a larger amount of data than this if the system is currently underused, providing the user with a higher bandwidth than he would usually expect. It must be noted, however, that as users cycle through the queuing system in the present embodiment, they may transmit an allocated amount of data whenever they reach the head of the queue. Access to bandwidth is therefore granular and it may be important to consider the likely queuing time when allocating amounts of data to be transmitted by users in order to ensure that bandwidth granularity does not become unacceptable. On the other hand, it is important not to allocate excessively small amount of data to individual users because this prejudices data transmission efficiency by increasing system control overhead. This problem becomes more significant as system overload increases, as described below.

During conditions of system overload, when the aggregate bandwidth sought by users exceeds the total bandwidth available, the system overloading must also be taken into consideration when allocating to users amounts of data for transmission. This does not apply in class 1, where users must always be allocated bandwidth as agreed with the system operator. This limits the number of class 1 users to which the system operator can sell guaranteed bandwidth. In classes 2 and 3, however, as system overloading increases, the system data analyser 18 causes the allocator 16 to allocate decreasing amounts of data to each user in the active pool queues. To do this an assessment is made of the currently available bandwidth and the users queued in classes 2 and 3, including the levels of service purchased by each of these users. The total bandwidth available is the total system bandwidth minus the bandwidth already allocated to users in class 1. The system then evaluates the aggregate bandwidth required to serve the users queued in classes 2 and 3 and (given that the system is overloaded) calculates by how much the bandwidth requested in classes 2 and 3 must be reduced in order to match the total bandwidth available. In doing this, because class 3 users have lower priority than class 2 users, the bandwidth to be allocated to class 3 users is reduced by a larger factor than the bandwidth to be allocated to class 2 users. When reduction factors for classes 2 and 3 have been calculated, the amount of data which would have been allocated to each user in class 2 and 3 in non-overload conditions is reduced by a class 2 reduction factor and a class 3 reduction factor respectively. Once the allocated amounts of data have been adjusted in this way, corresponding bandwidth can be provided to the user at the head of the queue in each class in the same way as in non-overloaded conditions. This might be, for example, by providing bandwidth to the user at the head of the queue in each class in turn.

Clearly, assessments of system conditions and the users queued in each class must be made sufficiently frequently to respond to changes in these parameters, primarily as the number of users contending for bandwidth increases and decreases.

In each class, when the user at the head of the queue has sent its allocated amount of data, the allocator 16 assesses whether the user requires further bandwidth to complete its desired data transmission (step 24). If so, the allocator instructs the queuer 14 to return the user to the end of the queue in its active pool. If not, the allocator moves the user to the inactive pool in the same class (step 26). If the user makes no further contention request within a timeout period, the user is moved out of the inactive pool (step 28) into the other-users group 6.

## Claims

1. A method for allocating bandwidth to users in a communications system when the total bandwidth available is less than the aggregate bandwidth sought by users, comprising the steps of:
queuing (20) in an active pool all the users seeking bandwidth;
allocating (22) to the user at the head of the queue bandwidth to transmit and/or receive a predetermined quantity of data;
if, after sending and/or receiving the predetermined quantity of data, the user is seeking further bandwidth, moving the user to the end of the queue in the active pool, and otherwise moving (26) the user to an inactive pool; and
if a user in the inactive pool seeks or contends for bandwidth, moving (28) the user to the end of the queue in the active pool.

2. A method for allocating bandwidth to users in a communications system when the total bandwidth available is less than the aggregate bandwidth sought by users, comprising the steps of:
classifying each user into one of one or more priority classes, and in each class carrying out all the steps of claim 1.

3. A method according to claim 2, in which the quantity of data assigned to each user is varied in response to the total bandwidth available and the number of users seeking bandwidth.

4. A method according to claim 3, in which the quantity of data assigned to each user is varied in order to provide each user with an acceptably short bandwidth access time or an acceptable average bandwidth.

5. A method according to claim 2, 3 or 4, in which two or more users are assigned different quantities of data to be transmitted or received when each user reaches the head of the queue in the active pool.

6. A method according to claim 5, in which the ratios between the quantities of data remain fixed if the quantity of data assigned to each user is varied.

7. A method according to any one of claims 2 to 6, in which, when the total bandwidth available reduces or the bandwidth sought by users increases, the quantity of data assigned to each user in a lower priority class is reduced further than for each user in a higher priority class.

8. A method according to any one of claims 2 to 7, in which a bandwidth-critical type of communication, such as a voice channel, is classified into a high priority class.

9. A method according to any preceding claim, in which two or more users may represent the same communications system subscriber seeking bandwidth for two or more different communications channels, which may carry different types of communications.

10. A controller for a communications system in which a plurality of users may contend for bandwidth, comprising, in order to allocate bandwidth to users when the total bandwidth available is less than the aggregate bandwidth sought by users:
an active pool queuer (14) adapted to queue in an active pool the users seeking bandwidth;
an allocator (16) (1) adapted to repeatedly allocate bandwidth to the user at the head of the active pool queue to transmit and/or receive a predetermined quantity of data, and (2) if, after sending and/or receiving the predetermined quantity of data, the user is seeking further bandwidth, move the user to the end of the queue in the active pool, and otherwise move the user to an inactive pool; and
a contention processor (10) adapted to move to the end of the queue in the active pool any user in the inactive pool seeking or contending for bandwidth.

11. A controller according to claim 10, further comprising:
a classifier (12) adapted to classify the users into one or more priority classes;
wherein the active pool queuer (14) is adapted to queue in an active pool (2) in each class the users in that class seeking bandwidth;
wherein the allocator (16), (1) is adapted to allocate repeatedly in each class bandwidth to the user at the head of the active pool queue to transmit and/or receive a predetermined quantity of data, and (2) if, after sending and/or receiving the predetermined quantity of data, the user is seeking further bandwidth, to move the user to the end of the queue in the active pool, and otherwise to move the user to an inactive pool (4); and
wherein the contention processor (10), in each class, is adapted to move to the end of the queue in the active pool (12) any user in the inactive pool (4) seeking or contending for bandwidth.

12. A controller according to claim 11, in which the allocator (16) is adapted to vary the quantity of data assigned to each user in response to the total bandwidth available and the number of users seeking bandwidth.

13. A controller according to claim 12, in which the quantity of data assigned to each user is varied in order to provide each user with an acceptably short bandwidth access time or an acceptable average bandwidth.

14. A controller according to claim 11, 12 or 13, in which the allocator (16) is adapted to assign to two or more users different quantities of data to be transmitted or received when each user reaches the head of the queue in the active pool (2).

15. A controller according to claim 14, in which the ratios between the quantities of data remain fixed when the quantity of data assigned to each user is varied.

16. A controller according to any one of claims 11 to 15, in which, when the total bandwidth available reduces or the bandwidth sought by users increases, the allocator (16) is adapted to reduce the quantity of data assigned to each user in a lower priority class further than for each user in a higher priority class.

17. A controller according to any one of claims 11 to 16, in which the classifier (12) is adapted to classify a bandwidth-critical type of communication, such as a voice channel, into a high priority class.

18. A controller according to one of claims 10 to 17, in which two or more users may represent the same communications system subscriber seeking bandwidth for two or more different communications channels, which may carry different types of communications.

19. A communications system comprising a controller as defined in any of claims 10 to 18.

20. A communications system according to claim 19, being a fixed wireless access system.

## Patentansprüche

1. Verfahren zum Zuteilen von Bandbreite an Benutzer in einem Kommunikationssystem, wenn die gesamte verfügbare Bandbreite kleiner als die von Benutzern insgesamt gewünschte Bandbreite ist, umfassend die folgenden Schritte:
Einsetzen aller Bandbreite wünschenden Benutzer in eine Warteschlange (20) in einem aktiven Pool,
Zuteilen (22) von Bandbreite zum Senden und/oder Empfangen einer vorbestimmten Datenmenge an den Benutzer an der Spitze der Warteschlange,
wenn der Benutzer nach dem Senden und/oder Empfangen der vorbestimmten Datenmenge weitere Bandbreite wünscht, Bewegen des Benutzers an das Ende der Warteschlange in dem aktiven Pool und ansonsten Bewegen (26) des Benutzers in einen inaktiven Pool, und,
wenn ein Benutzer in dem inaktiven Pool Bandbreite wünscht oder sich um Bandbreite bewirbt, Bewegen (28) des Benutzers an das Ende der Warteschlange in dem aktiven Pool.

2. Verfahren zum Zuteilen von Bandbreite an Benutzer in einem Kommunikationssystem, wenn die gesamte verfügbare Bandbreite kleiner als die von Benutzern insgesamt gewünschte Bandbreite ist, umfassend die folgenden Schritte:
Einstufen jedes Benutzers in eine von einer oder mehreren Prioritätsklasse(n) und Durchführen aller Schritte nach Anspruch 1 in jeder Klasse.

3. Verfahren nach Anspruch 2, bei dem die jedem Benutzer zugeteilte Datenmenge als Antwort auf die gesamte verfügbare Bandbreite und die Zahl der Bandbreite wünschenden Benutzer variiert wird.

4. Verfahren nach Anspruch 3, bei dem die jedem Benutzer zugeteilte Datenmenge variiert wird, um jedem Benutzer eine akzeptabel kurze Bandbreitenzugangszeit oder eine akzeptable durchschnittliche Bandbreite bereitzustellen.

5. Verfahren nach Anspruch 2, 3 oder 4, bei dem zwei oder mehr Benutzern verschiedene Datenmengen zum Senden oder Empfangen zugeteilt werden, wenn jeder Benutzer die Spitze der Warteschlange in dem aktiven Pool erreicht.

6. Verfahren nach Anspruch 5, bei dem die Verhältnisse zwischen den Datenmengen fest bleiben, wenn die jedem Benutzer zugeteilte Datenmenge variiert wird.

7. Verfahren nach einem der Ansprüche 2 bis 6, bei dem, wenn die gesamte verfügbare Bandbreite kleiner wird oder die von Benutzern gewünschte Bandbreite größer wird, die jedem Benutzer in einer niedrigeren Prioritätsklasse zugeteilte Datenmenge weiter reduziert wird als für jeden Benutzer in einer höheren Prioritätsklasse.

8. Verfahren nach einem der Ansprüche 2 bis 7, bei dem ein bandbreitenkritischer Kommunikationstyp, wie z.B. ein Sprachkanal, in eine hohe Prioritätsklasse eingestuft wird.

9. Verfahren nach einem der vorhergehenden Ansprüche, bei dem zwei oder mehr Benutzer den gleichen Kommunikationssystemteilnehmer repräsentieren können, der Bandbreite für zwei oder mehr verschiedene Kommunikationskanäle wünscht, die verschiedene Kommunikationsarten tragen können.

10. Controller für ein Kommunikationssystem, bei dem sich eine Vielzahl von Benutzern um Bandbreite bewerben können, umfassend, um Benutzern Bandbreite zuzuteilen, wenn die gesamte verfügbare Bandbreite kleiner als die von Benutzern insgesamt gewünschte Bandbreite ist,
eine Warteschlangeneinrichtung für den aktiven Pool, die zum Einrichten einer Warteschlange in einem aktiven Pool ausgeführt ist,
einen Zuteiler (16), der ausgeführt ist, um dem Benutzer an der Spitze der Warteschlange des aktiven Pools wiederholt Bandbreite zum Senden und/oder Empfangen einer vorbestimmten Datenmenge zuzuteilen und (2), wenn der Benutzer nach dem Senden und/oder Empfangen der vorbestimmten Datenmenge weitere Bandbreite wünscht, den Benutzer an das Ende der Warteschlange in dem aktiven Pool zu bewegen und ansonsten den Benutzer zu einem inaktiven Pool zu bewegen, und
einen Bewerbungsprozessor (10) zum Bewegen jedes Benutzers in dem inaktiven Pool, der Bandbreite wünscht oder sich um Bandbreite bewirbt, an das Ende der Warteschlange in dem aktiven Pool.

11. Controller nach Anspruch 10, ferner umfassend
einen Klassifizierer (12), der zum Einstufen der Benutzer in eine oder mehrere Prioritätsklassen ausgeführt ist,
wobei die Warteschlangeneinrichtung für den aktiven Pool (14) ausgeführt ist, um in jeder Klasse die Benutzer in dieser Klasse, die Bandbreite wünschen, in eine Warteschlange in einem aktiven Pool (2) einzufügen,
wobei der Zuteiler (16) ausgeführt ist, um in jeder Klasse wiederholt (1) dem Benutzer an der Spitze der Warteschlange des aktiven Pools Bandbreite zum Senden und/oder Empfangen einer vorbestimmten Datenmenge zuzuteilen und (2), wenn der Benutzer nach dem Senden und/oder Empfangen der vorbestimmten Datenmenge weitere Bandbreite wünscht, den Benutzer an das Ende der Warteschlange in dem aktiven Pool (12) zu bewegen und ansonsten den Benutzer in einen inaktiven Pool (4) zu bewegen, und
wobei der Bewerbungsprozessor (10) in jeder Klasse ausgeführt ist, um jeden Benutzer in dem inaktiven Pool (4), der Bandbreite sucht oder sich um Bandbreite bewirbt, an das Ende der Warteschlange in dem aktiven Pool (12) zu bewegen.

12. Controller nach Anspruch 11, bei dem der Zuteiler (16) zum Variieren der jedem Benutzer als Antwort auf die gesamte verfügbare Bandbreite und die Anzahl von Bandbreite wünschenden Benutzern ausgeführt ist.

13. Controller nach Anspruch 12, bei der die jedem Benutzer zugeteilte Datenmenge variiert wird, um jedem Benutzer eine akzeptabel kurze Bandbreitenzugangszeit oder eine akzeptable durchschnittliche Bandbreite bereitzustellen.

14. Controller nach Anspruch 11, 12 oder 13, bei dem der Zuteiler (16) ausgeführt ist, um den zwei oder mehr Benutzern verschiedene zu sendende oder zu empfangende Datenmengen zuweist, wenn jeder Benutzer die Spitze der Warteschlange in dem aktiven Pool (2) erreicht.

15. Controller nach Anspruch 14, bei dem die Verhältnisse zwischen den Datenmengen fest bleiben, wenn die jedem Benutzer zugeteilte Datenmenge variiert wird.

16. Controller nach einem der Ansprüche 11 bis 15, bei dem, wenn die gesamte verfügbare Bandbreite kleiner wird oder die von Benutzern gewünschte Bandbreite größer wird, der Zuteiler (16) ausgeführt ist, um die jedem Benutzer in einer niedrigeren Prioritätsklasse zugeteilte Datenmenge weiter zu reduzieren als für jeden Benutzer in einer höheren Prioritätsklasse.

17. Controller nach einem der Ansprüche 11 bis 16, bei dem der Klassifizierer (12) zum Einstufen eines bandbreitenkritischen Kommunikationstyps, wie z.B. eines Sprachkanals, in eine höhere Prioritätsklasse ausgeführt ist.

18. Controller nach einem der Ansprüche 10 bis 17, bei dem zwei oder mehr Benutzer den gleichen Kommunikationssystemteilnehmer repräsentieren können, der Bandbreite für zwei oder mehr verschiedene Kommunikationskanäle wünscht, die verschiedene Kommunikationsarten tragen können.

19. Kommunikationssystem, das einen Controller nach einem der Ansprüche 10 bis 18 aufweist.

20. Kommunikationssystem nach Anspruch 19, das ein stationäres drahtloses Zugangssystem ist.

## Revendications

1. Procédé d'attribution de largeur de bande aux utilisateurs d'un système de communications quand la largeur de bande totale disponible est inférieure à la largeur de bande globale recherchée par les utilisateurs, comprenant les étapes de :
mise en file d'attente (20) dans une réserve active tous les utilisateurs qui recherchent une largeur de bande ;
l'attribution (22) à l'utilisateur se trouvant à la tête de la file d'attente d'une largeur de bande pour émettre et/ou recevoir une quantité prédéterminée de données ;
si, après l'envoi et/ou la réception de la quantité prédéterminée de données, l'utilisateur recherche une autre largeur de bande, le déplacement de l'utilisateur à la queue de la file d'attente dans la réserve active, si non le déplacement (26) de l'utilisateur dans une réserve inactive ; et
si un utilisateur dans la réserve inactive recherche une largeur de bande ou est en concurrence pour une largeur de bande, le déplacement (28) de l'utilisateur à la queue de la file d'attente dans la réserve active.

2. Procédé d'attribution de largeur de bande aux utilisateurs d'un système de communications quand la largeur de bande totale disponible est inférieure à la largeur de bande globale recherchée par les utilisateurs, comprenant les étapes de :
classification de chaque utilisateur dans l'une d'une ou plusieurs classes de priorité, et dans chaque classe exécution de toutes les étapes de la revendication 1.

3. Procédé selon la revendication 2, dans lequel la quantité de données assignée à chaque utilisateur est modifiée en réponse à la largeur de bande totale disponible et au nombre d'utilisateurs recherchant une largeur de bande.

4. Procédé selon la revendication 3, dans lequel la quantité de données assignée à chaque utilisateur est modifiée afin de fournir à chaque utilisateur un temps d'accès à la largeur de bande raisonnablement court ou une largeur de bande moyenne acceptable.

5. Procédé selon la revendication 2, 3 ou 4, dans lequel deux ou plusieurs utilisateurs se voient assigner différentes quantités de données à transmettre ou à recevoir quand chaque utilisateur atteint la tête de la file d'attente dans la réserve active.

6. Procédé selon la revendication 5, dans lequel les rapports entre les quantités de données restent fixes si la quantité de données assignée à chaque utilisateur est modifiée.

7. Procédé selon l'une quelconque des revendications 2 à 6, dans lequel quand la largeur de bande totale disponible diminue ou si la largeur de bande recherchée par les utilisateurs augmente, la quantité de données assignée à chaque utilisateur se trouvant dans une classe de priorité inférieure diminue davantage que pour chaque utilisateur se trouvant dans une classe de priorité supérieure.

8. Procédé selon l'une quelconque des revendications 2 à 7, dans lequel un type de communication à largeur de bande critique, tel qu'un canal vocal, est classifié dans une classe de haute priorité.

9. Procédé selon l'une quelconque des revendications précédentes, dans lequel deux ou plusieurs utilisateurs peuvent représenter le même abonné au système de communications qui recherche une largeur de bande pour deux ou plusieurs canaux de communications différents, lesquels peuvent porter différents types de communications.

10. Unité de commande d'un système de communications dans lequel une pluralité d'utilisateurs peuvent se faire concurrence pour l'obtention d'une largeur de bande, comprenant, afin d'attribuer une largeur de bande aux utilisateurs quand la largeur de bande totale disponible est inférieure à la largeur de bande globale recherchée par les utilisateurs :
un dispositif de mise en file d'attente en réserve active (14) adapté pour mettre en file d'attente dans une réserve active les utilisateurs qui recherchent une largeur de bande ;
un dispositif d'attribution (16) adapté pour (1) attribuer répétitivement une largeur de bande à l'utilisateur se trouvant à la tête de la file d'attente de la réserve active pour émettre et/ou recevoir une quantité prédéterminée de données, et (2) si, après l'envoi et/ou la réception de la quantité prédéterminée de données, l'utilisateur recherche une autre largeur de bande, déplacer l'utilisateur à la queue de la file d'attente dans la réserve active, si non déplacer l'utilisateur dans une réserve inactive ; et
un processeur de conflit (10) adapté pour déplacer à la queue de la file d'attente dans la réserve active tout utilisateur se trouvant dans la réserve inactive qui recherche une largeur de bande ou est en concurrence pour une largeur de bande.

11. Unité de commande selon la revendication 10, comprenant en outre :
un classificateur (12) adapté pour classifier les utilisateurs dans une ou plusieurs classes de priorité ;
dans laquelle le dispositif de mise en file d'attente en réserve active (14) est adapté pour mettre en file d'attente dans une réserve active (2) dans chaque classe les utilisateurs dans cette classe qui recherchent une largeur de bande ;
dans laquelle le dispositif d'attribution (16) est adapté pour (1) attribuer répétitivement dans chaque classe une largeur de bande à l'utilisateur se trouvant à la tête de la file d'attente de la réserve active pour émettre et/ou recevoir une quantité prédéterminée de données, et (2) si, après l'envoi et/ou la réception de la quantité prédéterminée de données, l'utilisateur recherche une autre largeur de bande, déplacer l'utilisateur à la queue de la file d'attente dans la réserve active, si non déplacer l'utilisateur dans une réserve inactive (4) ; et
dans laquelle le processeur de conflit (10), dans chaque classe, est adapté pour déplacer à la queue de la file d'attente dans la réserve active (12) tout utilisateur se trouvant dans la réserve inactive (4) qui recherche une largeur de bande ou est en concurrence pour une largeur de bande.

12. Unité de commande selon la revendication 11, dans laquelle le dispositif d'attribution (16) est adapté pour modifier la quantité de données assignée à chaque utilisateur en réponse à la largeur de bande totale disponible et au nombre d'utilisateurs qui recherchent une largeur de bande.

13. Unité de commande selon la revendication 12, dans laquelle la quantité de données assignées à chaque utilisateur est modifiée afin de fournir à chaque utilisateur un temps d'accès à la largeur de bande raisonnablement court ou une largeur de bande moyenne acceptable.

14. Unité de commande selon la revendication 11, 12 ou 13, dans laquelle le dispositif d'attribution (16) est adapté pour assigner à deux ou plusieurs utilisateurs différentes quantités de données à transmettre ou à recevoir quand chaque utilisateur atteint la tête de la file d'attente dans la réserve active (2).

15. Unité de commande selon la revendication 14, dans laquelle les rapports entre les quantités de données restent fixes si la quantité de données assignée à chaque utilisateur est modifiée.

16. Unité de commande selon l'une quelconque des revendications 11 à 15, dans laquelle quand la largeur de bande totale disponible diminue ou si la largeur de bande recherchée par les utilisateurs augmente, le dispositif d'attribution (16) est adapté pour diminuer la quantité de données assignée à chaque utilisateur se trouvant dans une classe de priorité inférieure davantage que pour chaque utilisateur se trouvant dans une classe de priorité supérieure.

17. Unité de commande selon l'une quelconque des revendications 11 à 16, dans laquelle le classificateur (12) est adapté pour classifier un type de communication à largeur de bande critique, tel qu'un canal vocal, dans une classe de haute priorité.

18. Unité de commande selon l'une quelconque des revendications 10 à 17, dans laquelle deux ou plusieurs utilisateurs peuvent représenter le même abonné au système de communications qui recherche une largeur de bande pour deux ou plusieurs canaux de communications différents, lesquels peuvent porter différents types de communications.

19. Système de communications comprenant une unité de commande telle que définie dans l'une quelconque des revendications 10 à 18.

20. Système de communications selon la revendication 19, étant un système d'accès sans fil fixe.
